# EUROPEAN PATENT APPLICATION

(11) **EP 3 496 361 A1**
(43) Date of publication of application: **12.06.2019**
(21) Application number: 18150789.8
(22) Date of filing: 09.01.2018
(51) Int. Cl.: H04L 29/06, H04W 12/06

(54) **AUTHENTICATION IN INTEGRATED SYSTEM ENVIRONMENT**

(30) Priority: 11.12.2017 US 201715838001
(71) Applicant: CyberArk Software Ltd., 4951040 Petach-Tikva (IL)
(72) Inventor: AIZIKOVICH, Evgeni, 4951040 Petach-Tikva (IL)
(74) Representative: Finnegan Europe LLP

(57) **Abstract**

Disclosed embodiments include receiving (702), at a first identity provider (108) configured to authenticate a plurality of network clients (122, 124), a request from a first network client (122) to establish a connection with an access-restricted network resource, the first network client having been redirected to the first identity provider from a service provider (102); sending (704), from the first identity provider to the first network client, a redirect message automatically directing the first network client to authenticate itself at a second identity provider (114) that is separate from the first identity provider; receiving (706), from the second identity provider, a result of the first network client authenticating itself at the second identity provider; and sending (708), from the first identity provider and to the service provider, an authentication message based on the result, the authentication message determining whether the first network client is authenticated and is permitted to establish the connection with the access-restricted network resource.

## Description

### BACKGROUND

Many enterprises and service providers strive to improve security and usability of services they provide over their networks. Access control techniques such as single sign-on and the like are popular because they may satisfy both security and usability requirements established by the enterprises and service providers. Specifically, access control techniques such as single sign-on and the like may permit a user to use one set of login credentials (e.g., name and password) to access multiple related, yet independent systems.

Security assertion markup language (SAML) is an open standard for exchanging authentication and authorization data between parties (e.g., between a service provider and an identity provider). SAML may be utilized to implement single sign-on over a network. For example, the SAML specification may define three roles: the principal (e.g., a user), an identity provider, and a service provider. The principal (e.g., a user using a network device) may request access to a protected resource on the service provider. The service provider may redirect the principal with a SAML request to the identity provider. The identity provider may display a login page for the principal to provide user credentials. If the principal provides the user credentials successfully, the identity provider may redirect back to the service provider with a SAML response. The service provider may assert the SAML response (e.g., by validating a signature), and if successful, the service provider may redirect the principal to the requested resource.

It is noted that the process described above may work well when the identity provider is configured to serve as the single party handling user authentications. However, as the number of principals and/or the number of service providers increases, the number of identity providers may also increase. Consequently, the authentication process may not be presented as a seamless process if the identity providers are not configured properly. There is thus a need for technological solutions for providing seamless authentication in an integrated system environment.

### SUMMARY

The disclosed embodiments describe non-transitory computer readable media and methods for providing authentication in an integrated system environment. For example, in an exemplary embodiment, there may be a non-transitory computer readable medium including instructions that, when executed by at least one processor, cause the at least one processor to perform operations for redirecting authentication requests in an integrated system environment. The operations may comprise: receiving, at a first identity provider configured to authenticate a plurality of network clients, a request from a first network client to establish a connection with an access-restricted network resource, the first network client having been redirected to the first identity provider from a service provider that is configured to enable redirection of the first network client to the access-restricted network resource; sending, from the first identity provider and to the first network client, a redirect message automatically directing the first network client to authenticate itself at a second identity provider that is separate from the first identity provider; receiving, from the second identity provider, a result of the first network client authenticating itself at the second identity provider; and sending, from the first identity provider and to the service provider, an authentication message based on the result of the first network client authenticating itself at the second identity provider, the authentication message determining whether the first network client is authenticated and is permitted to establish the connection with the access-restricted network resource.

According to a disclosed embodiment, the redirect message encapsulates information from the request from the first network client to establish the connection with the access-restricted network resource.

According to a disclosed embodiment, the redirect message is generated at the first identity provider.

According to a disclosed embodiment, the sending of the redirect message and the receiving of the result of the first network client authenticating itself at the second identity provider occur transparently to the first network client.

According to a disclosed embodiment, the operations further comprise enabling the first network client to store a local session cookie from the service provider if it is determined that the first network client is permitted to establish the connection with the access-restricted network resource.

According to a disclosed embodiment, the redirect message directs the first network client to authenticate itself at the second identity provider using a cryptographic key.

According to a disclosed embodiment, the redirect message directs the first network client to authenticate itself at the second identity provider using multi-factor authentication.

According to a disclosed embodiment, the redirect message directs the first network client to authenticate itself at the second identity provider using biometric identification.

According to a disclosed embodiment, the redirect message directs the first network client to authenticate itself at the second identity provider based on further authentication of the first network client at a secure network vault.

According to a disclosed embodiment, the redirect message is formatted according to a security assertion markup language.

According to a disclosed embodiment, the authentication message is formatted according to a hypertext markup language.

According to a disclosed embodiment, the operations further comprise: receiving, at the first identity provider, a request from a second network client to establish a connection with the access-restricted network resource, the second network client having been redirected to the first identity provider from the service provider; and authenticating, at the first identity provider and without reference to the second identity provider, the second network client.

According to a disclosed embodiment, the first identity provider and the second identity provider are in different system environments, but together are in the integrated system environment.

According to a disclosed embodiment, the service provider holds a first security certificate associated with the first identity provider, and the first identity provider holds a second security certificate associated with the second identity provider.

According to a disclosed embodiment, the first network client is redirected to the first identity provider conditional on the service provider holding the first security certificate, and the first network client is redirected to the second identity provider conditional on the first identity provider holding the second security certificate.

According to a disclosed embodiment, the operations further comprise determining, responsive to receipt of additional identification information, whether to authorize the request from the first network client and to allow the connection with the access-restricted network resource.

According to a disclosed embodiment, the first network client authenticates itself at the second identity provider and does not authenticate itself at the first identity provider.

According to a disclosed embodiment, the first network client authenticates itself at the first identity provider and re-authenticates itself at the second identity provider using the same authentication information it used to authenticate itself at the first identity provider.

According to a disclosed embodiment, the authentication message is sent from the first identity provider to the first network client.

According to a disclosed embodiment, the authentication message is sent from the first identity provider to the service provider.

According to another disclosed embodiment, a method may be implemented for redirecting authentication requests in an integrated system environment. The method may comprise: receiving, at a first identity provider configured to authenticate a plurality of network clients, a request from a first network client to establish a connection with an access-restricted network resource, the first network client having been redirected to the first identity provider from a service provider that is configured to enable redirection of the first network client to the access-restricted network resource; sending, from the first identity provider and to the first network client, a redirect message automatically directing the first network client to authenticate itself at a second identity provider that is separate from the first identity provider; receiving, from the second identity provider, a result of the first network client authenticating itself at the second identity provider; and sending, from the first identity provider and to the service provider, an authentication message based on the result of the first network client authenticating itself at the second identity provider, the authentication message determining whether the first network client is authenticated and is permitted to establish the connection with the access-restricted network resource.

According to another disclosed embodiment, the redirect message encapsulates information from the request from the first network client to establish the connection with the access-restricted network resource.

According to another disclosed embodiment, the redirect message is generated at the first identity provider.

According to another disclosed embodiment, the sending of the redirect message and the receiving of the result of the first network client authenticating itself at the second identity provider occur transparently to the first network client.

According to another disclosed embodiment, the method may further comprise enabling the first network client to store a local session cookie from the service provider if it is determined that the first network client is permitted to establish the connection with the access-restricted network resource.

According to another disclosed embodiment, the redirect message directs the first network client to authenticate itself at the second identity provider based on further authentication of the first network client at a secure network vault.

According to another disclosed embodiment, the redirect message is formatted according to a security assertion markup language.

According to another disclosed embodiment, the method may further comprise receiving, at the first identity provider, a request from a second network client to establish a connection with the access-restricted network resource, the second network client having been redirected to the first identity provider from the service provider; and authenticating, at the first identity provider and without reference to the second identity provider, the second network client.

According to another disclosed embodiment, the method may support a plurality of second identity providers, wherein the first identity provider determines which of the plurality of second identity providers to which the first network client should be redirected based on account identification information provided in the request from the first network client to establish the connection with the access-restricted network resource.

According to another disclosed embodiment, the method may support a plurality of second identity providers, wherein the first identity provider determines which of the plurality of second identity providers to which the first network client should be redirected based network address information of the first network client.

Aspects of the disclosed embodiments may include tangible computer-readable media that store software instructions that, when executed by one or more processors, are configured for and capable of performing and executing one or more of the methods, operations, and the like consistent with the disclosed embodiments. Also, aspects of the disclosed embodiments may be performed by one or more processors that are configured as special-purpose processor(s) based on software instructions that are programmed with logic and instructions that perform, when executed, one or more operations consistent with the disclosed embodiments.

Further aspects of the disclosure may provide an apparatus comprising means for performing any of the methods disclosed herein. For example, the apparatus may comprise: a memory; and at least one processor operably coupled to the memory, wherein the memory comprises instructions that, when executed by the at least one processor, cause the apparatus to perform any of the methods disclosed herein.

Further aspects of the disclosure may provide a computer program product configured to perform any of the methods disclosed herein.

It is to be understood that both the foregoing general description and the following detailed description are exemplary and explanatory only, and are not restrictive of the disclosed embodiments, as claimed.

### BRIEF DESCRIPTION OF THE DRAWINGS

The accompanying drawings, which are incorporated in and constitute a part of this specification, illustrate disclosed embodiments and, together with the description, serve to explain the disclosed embodiments. In the drawings:
FIG. 1 is a block diagram of an example system in accordance with disclosed embodiments.
FIG. 2 is a flow diagram depicting an example process for providing authentication in an example system in accordance with disclosed embodiments.
FIG. 3 is a flow diagram depicting another example process for providing authentication in an example system in accordance with disclosed embodiments.
FIG. 4 is a flow diagram depicting another example process for providing authentication in an example system in accordance with disclosed embodiments.
FIG. 5 is a block diagram of another example system in accordance with disclosed embodiments.
FIG. 6 is a flow diagram depicting an example process for serving a user request in an example system in accordance with disclosed embodiments.
FIG. 7 is a flow diagram depicting an example process for redirecting authentication requests in an example system in accordance with disclosed embodiments.
FIG. 8 is a flow diagram depicting an example process for authenticating a user in an example system in accordance with disclosed embodiments.

### DETAILED DESCRIPTION

In the following detailed description, numerous specific details are set forth in order to provide a thorough understanding of the disclosed example embodiments. However, it will be understood by those skilled in the art that the principles of the example embodiments may be practiced without every specific detail. Well-known methods, procedures, and components have not been described in detail so as not to obscure the principles of the example embodiments. Unless explicitly stated, the example methods and processes described herein are not constrained to a particular order or sequence, or constrained to a particular system configuration. Additionally, some of the described embodiments or elements thereof can occur or be performed simultaneously, at the same point in time, or concurrently.

Reference will now be made in detail to the disclosed embodiments, examples of which are illustrated in the accompanying drawings.

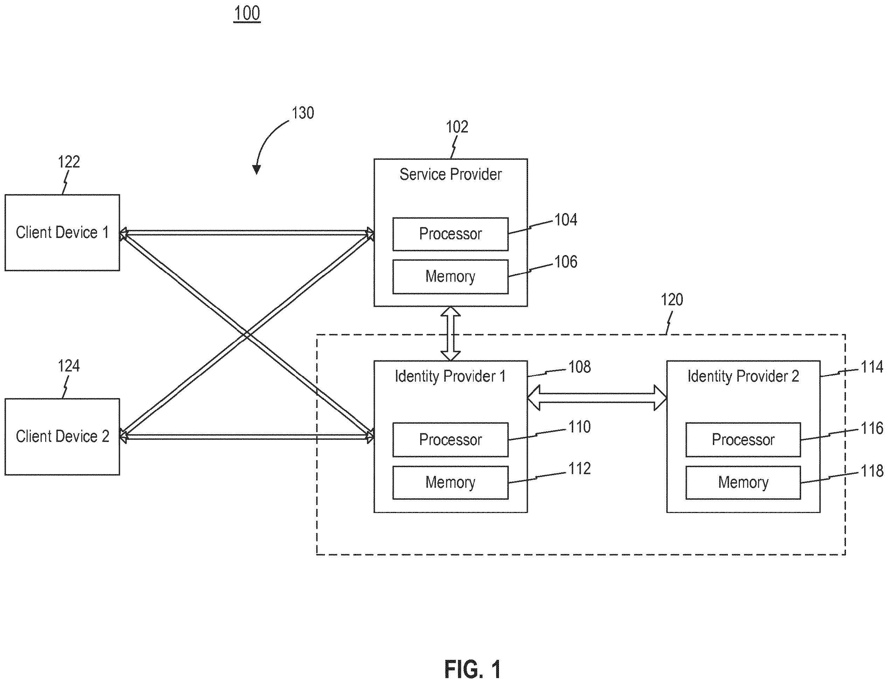

FIG. 1 is a block diagram of an example system in accordance with disclosed embodiments. As shown, system 100 includes a service provider 102 configured to provide services to one or more client devices 122 and 124 over a network 130. Network 130 may include the Internet, a local area network (LAN), a wireless local area network (WLAN), a wide area network (WAN), a cellular communication network, or any Internet Protocol (IP) based communication network and the like. In some embodiments, network 130 may be based on public cloud infrastructure, private cloud infrastructure, hybrid public/private cloud infrastructure, or no cloud infrastructure. In such differing embodiments, client devices 122 and 124, service provider 102, and identity providers 108 and 114 may each be in the same, or in different, networks or network segments.

Client devices 122 and 124 may include a user device or account, which may include, for example, a desktop computer, a laptop computer, a smartphone, a tablet, a personal digital assistant, an enterprise digital assistant, a server, a cloud-computing virtual machine or container, a smart card, a smart watch, a smart band, a smart headphone, computer-embedded clothing, a car-computer and other in-vehicle computer equipment, an Internet-of-Things (IoT) device, or other devices with data processing and network connectivity capabilities. Client devices 122 and 124 may have Internet browsers (e.g., Microsoft Internet Explorer®, Google Chrome®, Apple Safari®, Mozilla Firefox®, etc.) enabled to support communications in accordance with the security assertion markup language (SAML) or other security languages or protocols. It is contemplated that client devices 122 and 124 may be configured to support other types of communications without departing from the scope of the present disclosure.

A user may attempt to use client device 122, for example, to request access to one or more resources provided by service provider 102. Such resources may be referred to as network resources or target resources, and in some embodiments, such resources may include web pages, which client device 122 may request using communications in accordance with SAML. It is contemplated that numerous other types of resources may also be supported. Such resources may include, but are not limited to, web services, databases, image files, media files, documents, records, SQL servers, databases, applications, virtual machines, virtual machine containers, operating system directory services (e.g., Microsoft Active Directory™), cloud-computing resources (e.g., orchestrator software), IoT equipment (e.g., electricity or other utility equipment, physical access control devices, video surveillance equipment, etc.), and other types of resources that can be provided by service provider 102 over network 130. In some embodiments, these resources may be hosted or provided by client device 124, by the service provider 102, or by another device (not shown).

As shown in FIG. 1, service provider 102 may include at least one processor 104. Processor 104 may include one or more dedicated processing units, application-specific integrated circuits (ASICs), field-programmable gate arrays (FPGAs), or various other types of processors or processing units coupled with at least one non-transitory processor-readable memory 106 configured for storing processor-executable code. When the processor-executable code is executed by processor 104, processor 104 may carry out instructions in response to various types of requests received via network 130 and/or originating at service provider 102. For instance, processor 104 may carry out instructions to determine whether client device 122 is requesting access to a network resource provided by service provider 102 that is access-restricted.

A network resource is access-restricted when access to that network resource is limited by software-based restrictions (e.g., instructions carried out by processor 104). Access may be restricted, for example, through the requirement that some clients or accounts must supply, or have supplied on their behalf, authentication or authorization information (e.g., user credentials, usernames, passwords, SSH keys, symmetric (e.g., public/private) keys, or other types of cryptographic data or privileged access tokens) that is verified before access to the network resource is permitted. In some embodiments, a client or account may include a user identity established according to a particular local operating system (e.g., Microsoft Windows®, Mac OS®, UNIX, etc.) or a particular security service. Alternatively or additionally, a client or account may include a network identity established according to a network operating system (e.g., a Microsoft® network operating system, a Cisco® network operating system, a Dell® network operating system, a Linux network operating system, etc.) or a network security protocol or service. A client or account may also include an instance of a virtual machine or container running in a cloud computing environment. Furthermore, a client or account may include a token used to identify a particular computing resource, person, account, virtual machine, container, or other entities accessing a computer or network.

In some embodiments, service provider 102 may be configured so that service provider 102 can redirect client device 122 to one or more identity providers 108 and 114 for identity verification (authentication). As discussed below, service provider 102 may do so in accordance with the security assertion markup language (SAML), another security protocol or language, or a combination thereof.

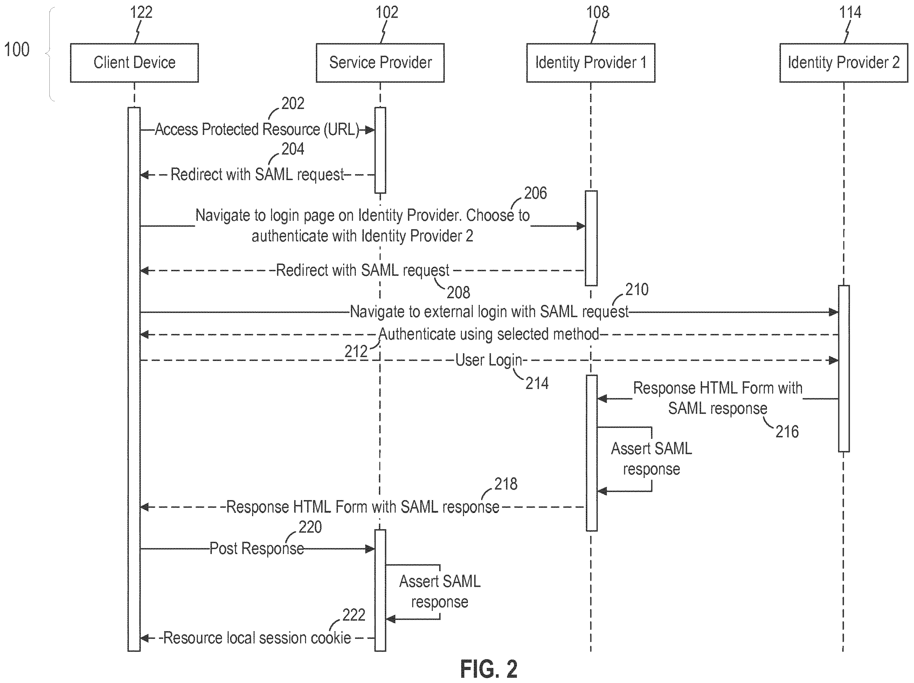

Referring now generally to FIG. 2, upon receiving an access request 202 from client device 122 to access an access-restricted network resource provided by service provider 102, service provider 102 may send a redirect message 204 back to client device 122 with instructions regarding to which identity provider client device 122 is redirected. For instance, redirect request 204 may redirect client device 122 to a first identity provider 108 or second identity provider 114. In some embodiments, service provider 102 may format redirect request 204 according to a particular security language or protocol (e.g., SAML or otherwise). It is to be understood, however, that formatting redirect request 204 as a SAML request is merely exemplary and is not meant to be limiting. It is contemplated that service provider 102 may format redirect request 204 in various other manners without departing from the scope of the present disclosure.

Upon receiving redirect request 204 from service provider 102, client device 122 may proceed accordingly by sending an authentication request 206 to first identity provider 108. First identity provider 108 may include at least one processor 110, as illustrated in FIG. 1. Processor 110 may include one or more dedicated processing units, application-specific integrated circuits (ASICs), field-programmable gate arrays (FPGAs), or various other types of processors or processing units coupled with at least one non-transitory processor-readable memory 112 configured for storing processor-executable code. When the processor-executable code is executed by processor 110, processor 110 may carry out instructions in response to various types of requests (e.g., including processing of authentication request 206) received or instructions originating on identity provider 108.

It is contemplated that authentication request 206 may arise or be implemented in various manners. For example, in some embodiments, authentication request 206 may be implemented in the form of a request that retrieves a login page (e.g., HTML-based, Java®-based, or otherwise) provided by first identity provider 108. The login page may include a prompt for one or more types of user credentials that first identity provider 108 can authenticate (e.g., first identity provider 108 may be configured to authenticate users using Facebook® usernames and passwords, so the login page may include a prompt for a Facebook® username and password). As discussed above, various different types of resources are contemplated, and each may have its own different authentication or authorization requirements.

The login page may also include one or more additional login options. For example, the login page may include a Google® account or Apple® ID as additional login options even if first identity provider 108 is not configured to authenticate users using Google® accounts or Apple® IDs directly. In this manner, if the user is not able to authenticate himself/herself using Facebook® username and password (e.g., the user may not have an established Facebook® account), the user may have the option to choose one of the additional login options presented on the login page. If the user chooses one of the additional login options (e.g., Apple® ID), first identity provider 108 may send a redirect request 208 to client device 122 to redirect client device 122 to another identity provider (e.g., a second identity provider) 114 configured to authenticate users using the chosen login option (e.g., Apple® ID). In some embodiments, first identity provider 108 and second identity provider 114 may be in different system environments, but together they may form an integrated system environment 120.

In some embodiments, first identity provider 108 may encapsulate information obtained from authentication request 206 (e.g., information regarding client device 122's request to establish connection with the access-restricted network resource) inside redirect request 208. The information encapsulated in this manner may help downstream processes keep track of the access request submitted by client device 122. The encapsulated information may be, for example, an IP address, MAC address, account name, etc., that is associated with the client device 122. It is contemplated that other techniques may be utilized to help keep track of the access request submitted by client device 122 without departing from the scope of the present disclosure. It is also contemplated that, in some embodiments, first identity provider 108 may format redirect request 208 as a SAML request. It is to be understood that formatting redirect request 208 as a SAML request is merely exemplary and is not meant to be limiting. First identity provider 108 may format redirect request 208 in various other manners (e.g., based on other languages or protocols) without departing from the scope of the present disclosure.

Upon receiving redirect request 208, client device 122 may proceed accordingly by sending an authentication request 210 to second identity provider 114. Second identity provider 114 may include at least one processor 116, as illustrated in FIG. 1. Processor 116 may include one or more dedicated processing units, application-specific integrated circuits (ASICs), field-programmable gate arrays (FPGAs), or various other types of processors or processing units coupled with at least one non-transitory processor-readable memory 118 configured for storing processor-executable code. When the processor-executable code is executed by processor 116, processor 116 may carry out instructions in response to various types of requests (e.g., including authentication request 210) received or instructions originating on identity provider 114.

It is contemplated that authentication request 210 may arise or be implemented in various manners. For example, in some embodiments, authentication request 210 may be implemented in the form of a request that retrieves a login page (e.g., HTML-based, Java®-based, or otherwise) provided by second identity provider 114. Continuing with the example above, it is contemplated that second identity provider 114 may be able to authenticate the user using the login option chosen by the user (e.g., Apple® ID) because that was the reason first identity provider 108 redirected client device 122 to second identity provider 114. It is therefore contemplated that second identity provider 114 may send a login page that includes a prompt 212 for user authentication using the login option chosen by the user to client device 122. The user may then enter his/her authentication data (e.g., Apple® ID) using the prompt 212, and client device 122 may send the authentication data 214 to second identity provider 114 for authentication. Of course, in other embodiments second identity provider 114 may provide additional or different alternative forms of authentication or authorization in response to request 210.

Second identity provider 114 may send the result 216 of the authentication to first identity provider 108 (or, in other embodiments, directly back to client device 122 or service provider 102). For example, if the user fails to provide valid authentication data to second identity provider 114, after one or a predetermined number of attempts, second identity provider 114 may identify that as a failure and send the result 216 to first identity provider 108 indicating the failure. On the other hand, if the user successfully provides valid authentication data 214 to second identity provider 114, second identity provider 114 may identify that as a success and send the result 216 to first identity provider 108 indicating the success. In some embodiments, second identity provider 114 may format result 216 as a hypertext markup language (HTML) document with a SAML response contained therein. It is to be understood that formatting result 216 as a HTML document is merely exemplary and is not meant to be limiting. It is contemplated that second identity provider 114 may format result 216 in various other manners, formats, and protocols without departing from the scope of the present disclosure.

In some embodiments, first identity provider 108 may assert (e.g., validate) result 216 received from second identity provider 114. For example, first identity provider 108 may hold a security certificate associated with second identity provider 114, which may be required to sign the result 216 using a digital signature. First identity provider 108 may therefore analyze the signature associated with result 216 against the security certificate associated with second identity provider 114 to determine whether result 216 is indeed sent by second identity provider 114. If first identity provider 108 cannot conclusively determine that result 216 is indeed sent by second identity provider 114, first identity provider 108 may discard result 216 and/or report result 216 as suspicious. On the other hand, if first identity provider 108 conclusively determines that result 216 is indeed sent by second identity provider 114, first identity provider 108 may assert result 216 as valid and send an authentication message 218 to client device 122 notifying client device 122 of the result 216. It is to be understood that the assertion process described above is presented merely as an example and is not meant to be limiting. It is contemplated that first identity provider 108 may be configured to implement other types of assertion and/or error-checking techniques without departing from the scope of the present disclosure. It is also contemplated that, in some embodiments, system 100 of FIGs. 1 and 2 may consider the condition that first identity provider 108 holds a security certificate associated with second identity provider 114 as a necessary condition for redirecting client device 122 to second identity provider 114. Further, in some embodiments first identity provider 108 and/or second identity provider 114 may not perform validation or assertion themselves, but may access an external entity (e.g., a CyberArk® secure credential vault, or a similar service) for performing those functions.

In some embodiments, first identity provider 108 may format authentication message 218 according to a HTML standard, a Java® standard, or another protocol or standard. For example, the authentication message 218 may be formatted as a HTML page containing a SAML response. It is to be understood that formatting authentication message 218 as a SAML response is merely exemplary and is not meant to be limiting. It is contemplated that first identity provider 108 may format authentication message 218 in various other manners, and according to other languages or protocols, without departing from the scope of the present disclosure.

Client device 122, upon receiving authentication message 218 indicating a successful authentication, may send the authentication message 218 (or other information confirming the successful authentication or authorization) to service provider 102 (e.g., illustrated as a response 220 posted to service provider 102). Service provider 102 may assert (e.g., validate) the authentication message 218 using techniques similar to those described above. For example, service provider 102 may hold a security certificate associated with first identity provider 108. First identity provider 108, being the party who generated the authentication message 218, may be required to sign the authentication message 218 using a digital signature. Service provider 102 may therefore analyze the signature associated with authentication message 218 against the security certificate associated with first identity provider 108 to determine whether authentication message 218 is indeed generated by or sent from first identity provider 108. In some embodiments, system 100 may consider the condition that service provider 102 holds a security certificate associated with first identity provider 108 as a necessary condition for redirecting client device 122 to service provider 102 for accessing a target network resource.

If service provider 102 cannot conclusively determine that authentication message 218 is indeed generated by or sent from first identity provider 108, service provider 102 may discard authentication message 218 and/or report authentication message 218 as suspicious. On the other hand, if service provider 102 conclusively determines that authentication message 218 is indeed generated by first identity provider 108, service provider 102 may assert authentication message 218 as valid and grant client device 122 access to the access-restricted network resource (e.g., hosted by service provider 102). In some embodiments, the access may be granted in the form of a local session connection, or a remote session connection, established between client device 122 and the access-restricted network resource.

In some embodiments, service provider 102 may send to, and/or allow client device 122 to store, a local session cookie 222 (e.g., HTML-based, Java®-based, or otherwise) from service provider 102 if service provider 102 determines that client device 122 is permitted to establish the local session connection with the access-restricted network resource. The local session cookie 222 may be maintained indefinitely, according to a predetermined expiration time, or up to the occurrence of a certain event (e.g., revocation by service provider 102). Alternatively, the local session cookie 222 may be maintained for a predetermined amount of time, a predetermined number of accesses or attempts, or some other established rules regulating local session cookies.

Access cookie 222 may include various fields, such as the IP address, MAC address, or account name of the client device 122, time-of-authentication or time-of-authorization information, signatures obtained from the authorization or authentication process(es) performed by first identity provider 108 or second identity provider 114, or various other types of information associated with the client device 122 or its authentication or authorization. In some embodiments, information corresponding to access cookie 222 may be maintained by service provider 102, or by an external resource (e.g., database) accessible to service provider 102. In some embodiments, service provider 102 may access that information to verify cookie 222, update or replace cookie 222, revoke or nullify cookie 222, etc.

In some embodiments, first identity provider 108 may be configured to send authentication message 218 to service provider 102 instead of (or in addition to) sending it to client device 122. It is to be understood that service provider 102 may assert the authentication message 218 in the same manner as described above, and if service provider 102 conclusively determines that authentication message 218 is indeed generated by or sent from first identity provider 108, service provider 102 may assert authentication message 218 as valid and grant client device 122 access to the access-restricted network resource.

As will be appreciated from the above discussion, system 100 of FIG. 1, as configured in accordance with disclosed embodiments, can allow first identity provider 108 to delegate authentication requests to second identity provider 114 when first identity provider 108 is unable to, or chooses not to, directly authenticate certain types of users. First identity provider 108 may carry out the delegation in an autonomous, secure, and seamless manner. The delegation may be carried out transparently to client device 122. In this manner, client device 122 may only need to authenticate itself at second identity provider 114 and does not need to authenticate itself at first identity provider 108, providing a feature that may be particularly useful, for example, in enterprise systems where integration is required between multiple identity providers. Further, in some embodiments first identity provider 108 may be capable of authenticating client device 122 but may choose to delegate that function to second identity provider 114 for a variety of reasons (e.g., according to a network authentication model, to reduce traffic congestion at identity provider 108, to handle new forms of authentication that second identity provider 114 is better able to handle, etc.).

It is to be understood that the references above to user accounts established with Facebook®, Google®, or Apple® are presented merely as examples and are not meant to be limiting. It is contemplated that system 100 may be configured to support various types of network accounts seeking access to various types of network resources without departing from the scope of the present disclosure. It is also to be understood that the references to login pages are presented merely as examples and are not meant to be limiting. The login pages may be received at client device 122 as complete and structured pages (e.g., HTML-formatted or Java®-formatted pages), or may be generated locally at client device 122 based on data that it receives. It is contemplated that identity providers 108 and 114 may be configured to carry out authentication processes using various types of devices and/or interfaces (e.g., a numerical keypad, a radio-frequency identification (RFID) reader, a finger print reader, a face detector, a retinal scanner, etc.) without departing from the scope of the present disclosure.

Furthermore, it is to be understood that first identity provider 108 may delegate authentication requests to second identity provider 114 for other reasons as well. For example, second identity provider 114 may be considered more secure than first identity provider 108 if second identity provider 114 carries out its authentication process in an encrypted manner or other secure manner. First identity provider 108 may choose to take advantage of the added security provided by second identity provider 114 and may redirect client device 122 to authenticate itself at second identity provider 114 using a cryptographic key. In another example, second identity provider 114 may be more secure than first identity provider 108 because second identity provider 114 utilizes a multi-factor or multi-stage authentication. First identity provider 108 may choose to take advantage of the added security provided by second identity provider 114 and may redirect client device 122 to authenticate itself at second identity provider 114 using the multi-factor or multi-stage authentication. In yet another example, second identity provider 114 may be more secure than first identity provider 108 because second identity provider 114 implements biometric identification. First identity provider 108 may choose to take advantage of the added security provided by second identity provider 114 and may redirect client device 122 (which may be equipped with a finger print reader, a face detector, a retinal scanner, or the like) to authenticate itself at second identity provider 114 using biometric identification.

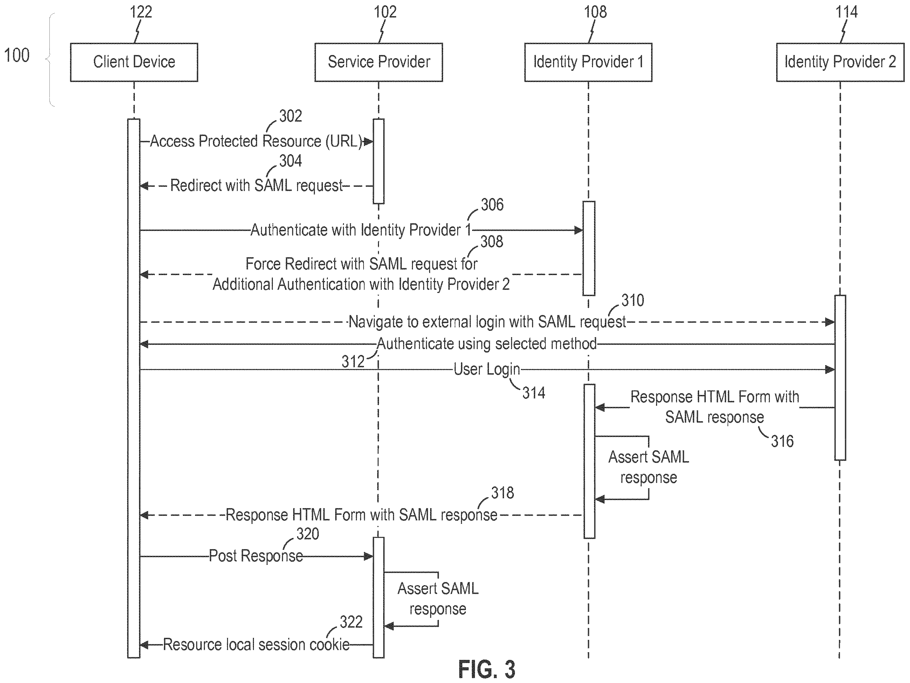

In still another example, service provider 102 may require client device 122 to be authenticated more than once. Referring generally to FIG. 3, upon receiving an access request 302 from client device 122 seeking access to an access-restricted network resource provided by service provider 102, service provider 102 may send a redirect request 304 back to client device 122 with instructions to redirect client device 122 to authenticate itself at first identity provider 108. Client device 122 may send an authentication request 306 to first identity provider 108, which may authenticate client device 122 utilizing various types of applicable authentication methods, as described above.

In addition to authenticating client device 122 once at first identity provider 108, first identity provider 108 may send a redirect request 308 to client device 122 with instructions to redirect client device 122 to re-authenticate itself at second identity provider 114. Client device 122 may thus send an authentication request 310 to second identity provider 114, which may authenticate client device 122 once again utilizing various types of applicable methods, as described above. For example, second identity provider 114 may send a request 312 to client device 122 requesting authentication data. Client device 122 may send the requested authentication data 214 back to second identity provider 114, which may then send the result 316 of the authentication to first identity provider 108. First identity provider 108 may then assert (e.g., validate) result 316, and if first identity provider 108 conclusively determines that result 316 is indeed sent by or generated by second identity provider 114, first identity provider 108 may assert result 316 as valid and send an authentication message 318 to client device 122 notifying client device 122 of the authentication result. In some embodiments, client device 122 is not notified of the authentication result at all, but is permitted to access the access-controlled network resource.

Client device 122, upon receiving authentication message 318 indicating a successful authentication, may send the authentication message 318 (or information representing the successful authentication) to service provider 102 (e.g., illustrated in FIG. 3 as a response 320 posted to service provider 102). Alternatively, first identity provider 108 may be configured to send authentication message 318 to service provider 102 instead of (or in addition to) sending it to client device 122. Service provider 102 may assert (e.g., validate) the authentication message 318 in a manner similar to that described above. If service provider 102 conclusively determines that authentication message 318 is indeed generated by or sent from first identity provider 108, service provider 102 may assert authentication message 318 as valid and grant client device 122 access to the access-restricted network resource.

In some embodiments, client device 122 may use the same authentication information for both first identity provider 108 and second identity provider 114. In some embodiments, client device 122 may use different authentication information for first identity provider 108 and second identity provider 114. It is to be understood that service provider 102 may require client device 122 to authenticate itself at more than two identity providers. It is contemplated that whether to require client device 122 to authenticate itself at one or more than one identity providers may be determined based on various factors, including, but not limited to, data security concerns, network traffic conditions, and user-friendliness concerns.

In accordance with some embodiments, client device 122 may be directed to authenticate itself in various other manners without departing from the scope of the present disclosure. For example, in some embodiments, service provider 102 may be configured to receive identification information in addition to identification information already provided to first identity provider 108 and/or second identity provider 114. Service provider 102 may determine, responsive to receipt of the additional identification information, whether to grant client device 122 access to the access-restricted network resource. Moreover, in some embodiments, client device 122 may be directed to authenticate itself at second identity provider 114 based on further authentication of client device 122 at a secure network vault (e.g., provided by CyberArk®), as discussed above.

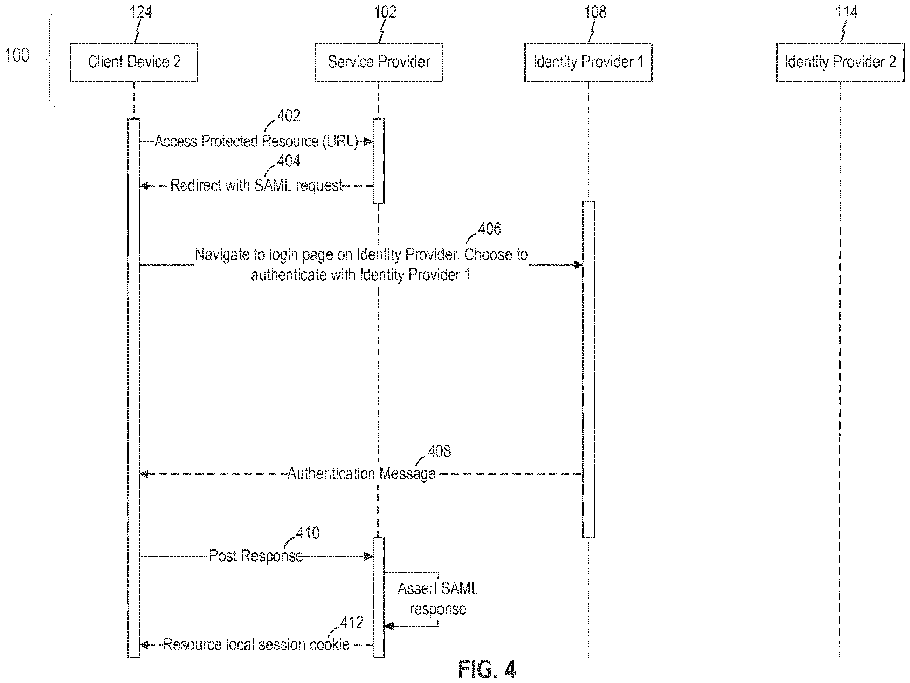

It is also contemplated that client devices are not required to be redirected to second identity provider 114 if first identity provider 108 can effectively handle the authentication process. Referring now generally to FIG. 4, upon receiving an access request 402 from a client device 124 to access an access-restricted network resource provided by service provider 102, service provider 102 may send a redirect request 404 back to client device 124. For illustrative purposes, redirect request 404 may redirect client device 124 to first identity provider 108, and first identity provider 108 can, in some embodiments, effectively handle the authentication of client device 124. In this situation, first identity provider 108 may authenticate client device 124 without redirecting client device 124 to second identity provider 114. As discussed above, first identity provider 108 may decide whether or not to delegate the access request to second identity provider 114 for a variety of reasons.

Continuing with this example, as shown in FIG. 4, client device 124 may send an authentication request 406 to first identity provider 108. Authentication request 406 may be implemented in the form of a request that retrieves a login page (as discussed above) provided by first identity provider 108. The login page may include a prompt for one or more types of user credentials that first identity provider 108 can authenticate. The login page may also include one or more additional login options. If the user chooses to authenticate himself/herself using user credentials that first identity provider 108 can authenticate (and/or chooses to authenticate), there is no need to redirect client device 124 to another identity provider (e.g., second identity provider 114). In other words, first identity provider 108 may process the authentication request 406 and send an authentication message 408 to client device 124 notifying client device 124 of the authentication result. In other embodiments, first identity provider 108 may decide to delegate the access request to second identity provider 114, as discussed above.

Client device 124, upon receiving authentication message 408 indicating a successful authentication, may send the authentication message 408 (or data representing a successful authentication) to service provider 102 (e.g., illustrated in FIG. 4 as a response 410 posted to service provider 102). Alternatively, first identity provider 108 may be configured to send authentication message 408 to service provider 102 instead of (or in addition to) sending it to client device 124. Service provider 102 may assert (e.g., validate) the authentication message 408 in a manner similar to that described above. If service provider 102 conclusively determines that authentication message 408 is indeed generated by or sent from first identity provider 108, service provider 102 may assert authentication message 408 as valid and grant client device 124 access to the access-restricted network resource.

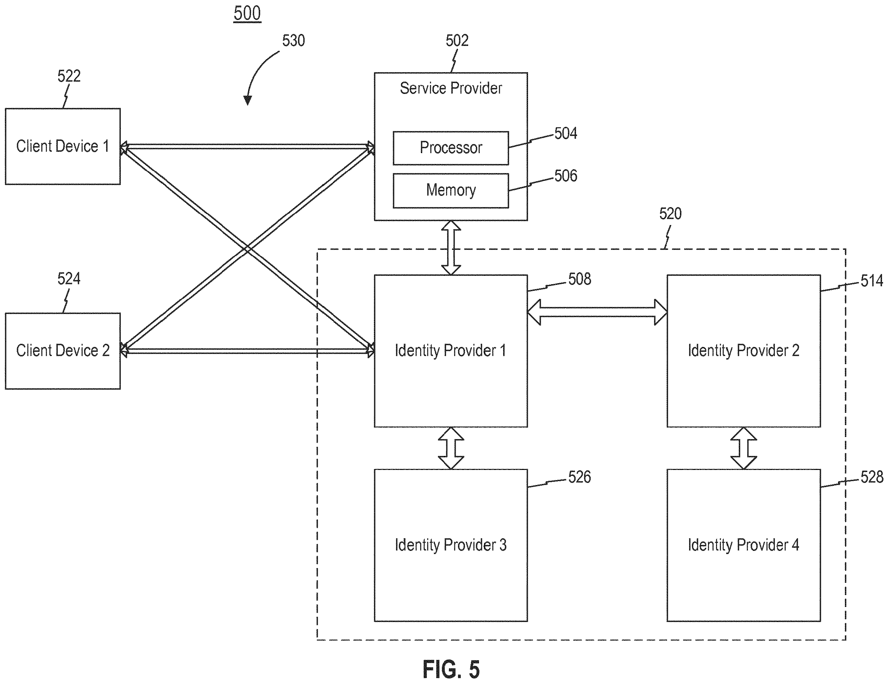

Referring now to FIG. 5, an exemplary system 500 is illustrated. It is contemplated that system 500 may include more than two identity providers 508 and 514 referenced in the examples above. As shown in FIG. 5, first identity provider 508 may be configured to delegate authentication requests to a plurality of second identity providers 514 and 526. In some embodiments, first identity provider 508 may be configured to determine which of the plurality of second identity providers 514 and 526 to which client device 522 should be redirected. For example, first identity provider 508 may be configured to make the determination based on account identification information provided in the access request from client device 522. First identity provider 508 may select an identity provider that is better qualified to authenticate the type of account identified by the account identification information, or for various other reasons discussed above. In another example, first identity provider 508 may be configured to make the determination based on network address information of client device 522. First identity provider 508 may, for example, select an identity provider that is in closer proximity to client device 522. In still another example, first identity provider 508 may be configured to make the determination based on the availability (e.g., work load) of the identity providers 514 and 526. It is to be understood that first identity provider 508 may be configured to make the determination based on various other factors and/or a combination of such factors without departing from the scope of the present disclosure, as discussed above.

Further, as shown in FIG. 5, the identity providers are not limited to forming merely two levels. In some embodiments, the second identity providers (e.g., second identity provider 514 as shown in FIG. 5) may be configured to delegate authentication requests to one or more additional identity providers (e.g., a fourth identity provider 528). It is contemplated that communications between second identity provider 514 and fourth identity provider 528 may be carried out in manners similar to those described above. It is also contemplated that additional levels of identity providers may be utilized to provide user authentication without departing from the scope of the present disclosure.

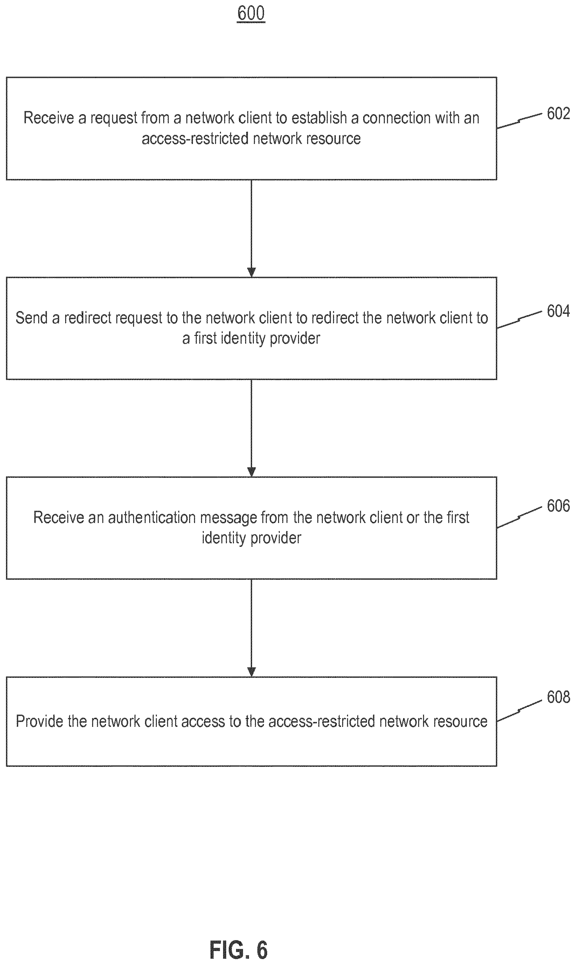

FIG. 6 is an exemplary flowchart showing a process 600 for serving a user request. In accordance with above embodiments, process 600 may be implemented in system 100 or system 500. For example, process 600 may be performed by service provider 102 or 502.

At step 602, process 600 may receive a request from a network client (e.g., client device 122 or 124 as depicted in FIG. 1, or client device 522 or 524 as depicted in FIG. 5) to establish a connection with an access-restricted network resource. At step 604, process 600 may send a redirect request to the network client. The redirect request may redirect the network client to authenticate itself at a first identity provider. The network client may proceed according to the redirect request as previously described, and at step 606, process 600 may receive an authentication message from the network client and/or the first identity provider. The authentication message may be received after the first identify provider authenticates the network client and redirects the network client to the service provider. Process 600 may validate the authentication message, and if the authentication message is indeed valid, process 600 may grant the network client access to the access-restricted network resource at step 608.

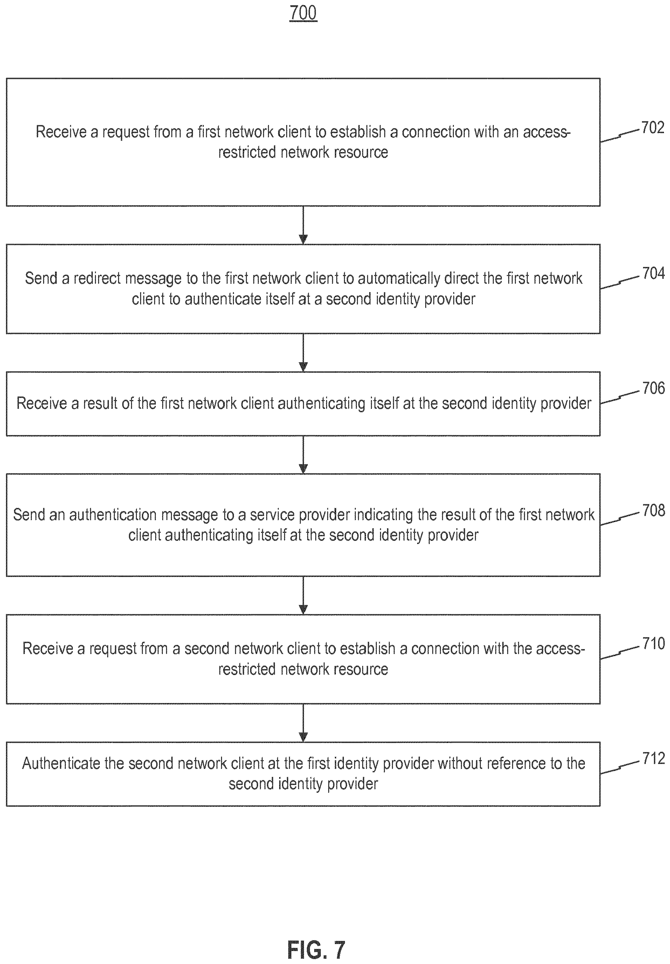

FIG. 7 is an exemplary flowchart showing a process 700 for redirecting an authentication request. In accordance with above embodiments, process 700 may be implemented in system 100 or system 500. For example, process 700 may be performed by first identity provider 108 or first identity provider 508.

At step 702, process 700 may receive (e.g., at first identity provider 108 or first identity provider 508, configured to authenticate a plurality of network clients) a request from a first network client (e.g., client 122 or 522) to establish a connection with an access-restricted network resource. The first network client may have been redirected to the first identity provider from a service provider (e.g., per a redirect request provided at step 604 of process 600) that is configured to enable redirection of the first network client to the access-restricted network resource.

At step 704, process 700 may send, from the first identity provider and to the first network client, a redirect message automatically directing the first network client to authenticate itself at a second identity provider (e.g., second identity provider 114 or 514) that is separate from the first identity provider. The network client may proceed according to the redirect message, and at step 706, process 700 may receive, from the second identity provider, a result of the first network client authenticating itself at the second identity provider.

At step 708, process 700 may send, from the first identity provider and to the service provider, an authentication message based on the result of the first network client authenticating itself at the second identity provider. The authentication message may determine whether the first network client is authenticated and is permitted to establish the connection with the access-restricted network resource. This authentication message may be validated by process 600, and if the authentication message is indeed valid, process 600 may grant the network client access to the access-restricted network resource.

It is to be understood that the first identity provider may redirect the first network client to the second identity provider for various reasons, as discussed above. For example, the first identity provider may choose to redirect the first network client to the second identity provider if the second identity provider is be better equipped to authenticate the first network client. In another example, the first identity provider may choose to redirect the first network client to the second identity provider if the second identity provider is more secure than first identity provider (e.g., if the second identity provider carries out its authentication process in an encrypted manner using a cryptographic key, if the second identity provider utilizes a multi-factor or multi-stage authentication, or if the second identity provider implements biometric identification and the like). In yet another example, the first identity provider may choose to redirect the first network client to the second identity provider to force the first network client to re-authenticate itself at the second identity provider. In some embodiments, the first network client may use the same authentication information for both the first identity provider and the second identity provider. In some embodiments, the first network client may use different authentication information for the first identity provider and the second identity provider.

It is also to be understood that process 700 does not always require network clients to authenticate themselves at a second identity provider. For example, at step 710, process 700 may receive, at the first identity provider, a request from a second network client to establish a connection with the access-restricted network resource. The second network client may have been redirected to the first identity provider from a service provider (e.g., per redirect request provided at step 604 of process 600). If the first identity provider can effectively handle (and/or chooses to handle) the authentication of the second network client, the first identity provider may authenticate, at step 712, the second network client without reference to the second identity provider. The first identity provider may send the result of the authentication to the service provider as previously described.

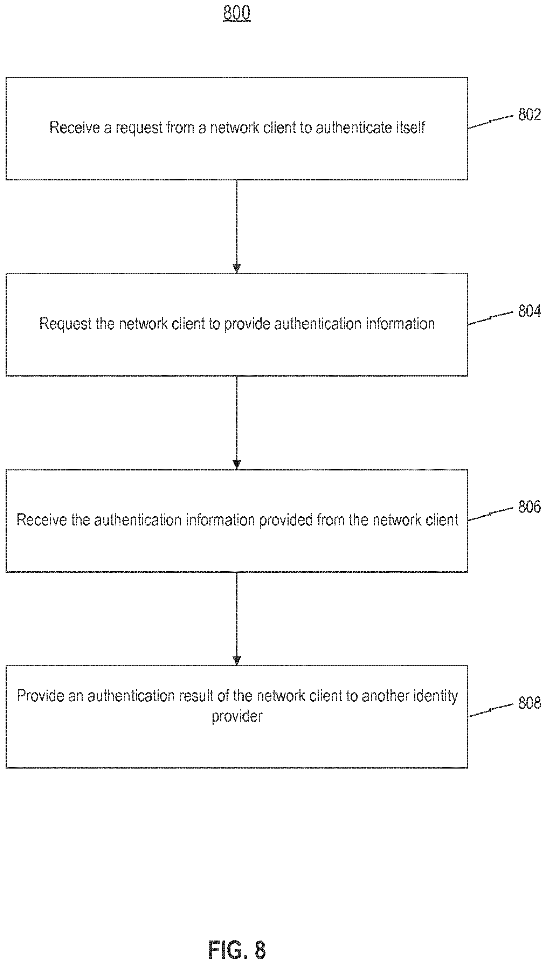

FIG. 8 is an exemplary flowchart showing a process 800 for authenticating a network client. In accordance with above embodiments, process 800 may be implemented in system 100 or system 500. For example, process 800 may be performed by second identity provider 114 or 514.

At step 802, process 800 may receive (e.g., at second identity provider 114 or 514) a request from a network client to authenticate itself. The network client may have been redirected to the second identity provider from the first identity provider (e.g., per redirect message provided at step 704 of process 700). At step 804, process 800 may request the network client to provide authentication information to the second identity provider. At step 806, process 800 may receive, at the second identity provider, the authentication information provided from the network client. At step 808, process 800 may provide, to the first identity provider (which may be configured to receive, at step 706), a result of the network client authenticating itself at the second identity provider.

It is to be understood that the disclosed embodiments are not necessarily limited in their application to the details of construction and the arrangement of the components and/or methods set forth in the following description and/or illustrated in the drawings and/or the examples. The disclosed embodiments are capable of variations, or of being practiced or carried out in various ways.

The disclosed embodiments may be implemented in a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowcharts and block diagrams in the Figures illustrate the architecture, functionality, and operation of possible implementations of systems, methods and computer program products according to various embodiments of the present invention. In this regard, each block in the flowcharts or block diagrams may represent a software program, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant virtualization platforms, virtualization platform environments, trusted cloud platform resources, cloud-based assets, protocols, communication networks, security tokens and authentication credentials will be developed and the scope of the these terms is intended to include all such new technologies a priori.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims.

## Claims

1. A computer-implemented method for redirecting authentication requests in an integrated system environment, the method comprising:
receiving, at a first identity provider configured to authenticate a plurality of network clients, a request from a first network client to establish a connection with an access-restricted network resource, the first network client having been redirected to the first identity provider from a service provider that is configured to enable redirection of the first network client to the access-restricted network resource;
sending, from the first identity provider and to the first network client, a redirect message automatically directing the first network client to authenticate itself at a second identity provider that is separate from the first identity provider;
receiving, from the second identity provider, a result of the first network client authenticating itself at the second identity provider; and
sending, from the first identity provider and to the service provider, an authentication message based on the result of the first network client authenticating itself at the second identity provider, the authentication message determining whether the first network client is authenticated and is permitted to establish the connection with the access-restricted network resource.

2. The computer-implemented method of claim 1, wherein the redirect message encapsulates information from the request from the first network client to establish the connection with the access-restricted network resource.

3. The computer-implemented method of claim 1 or claim 2, wherein the redirect message is generated at the first identity provider.

4. The computer-implemented method of any of the preceding claims, wherein the sending of the redirect message and the receiving of the result of the first network client authenticating itself at the second identity provider occur transparently to the first network client.

5. The computer-implemented method of any of the preceding claims, wherein the method further comprises enabling the first network client to store a local session cookie from the service provider if it is determined that the first network client is permitted to establish the connection with the access-restricted network resource.

6. The computer-implemented method of any of the preceding claims, wherein the redirect message directs the first network client to authenticate itself at the second identity provider:
using a cryptographic key; and/or
using multi-factor authentication; and/or
using biometric identification; and/or
based on further authentication of the first network client at a secure network vault.

7. The computer-implemented method of any of the preceding claims, wherein the redirect message is formatted according to a security assertion markup language or a hypertext markup language.

8. The computer-implemented method of any of the preceding claims, wherein the method further comprises:
receiving, at the first identity provider, a request from a second network client to establish a connection with the access-restricted network resource, the second network client having been redirected to the first identity provider from the service provider; and
authenticating, at the first identity provider and without reference to the second identity provider, the second network client.

9. The computer-implemented method of any of the preceding claims, wherein the first identity provider and the second identity provider are in different system environments, but together are in the integrated system environment.

10. The computer-implemented method of any of the preceding claims, wherein the service provider holds a first security certificate associated with the first identity provider, and the first identity provider holds a second security certificate associated with the second identity provider, and
wherein, optionally, the first network client is redirected to the first identity provider conditional on the service provider holding the first security certificate, and the first network client is redirected to the second identity provider conditional on the first identity provider holding the second security certificate.

11. The computer-implemented method of any of the preceding claims, wherein the method further comprises determining, responsive to receipt of additional identification information, whether to authorize the request from the first network client and to allow the connection with the access-restricted network resource.

12. The computer-implemented method of any of the preceding claims, wherein:
the first network client authenticates itself at the second identity provider and does not authenticate itself at the first identity provider; or
the first network client authenticates itself at the first identity provider and re-authenticates itself at the second identity provider using the same authentication information it used to authenticate itself at the first identity provider.

13. The computer-implemented method of any of the preceding claims, wherein the authentication message is sent from the first identity provider to the first network client and/or the service provider.

14. The computer-implemented method of any of the preceding claims, the integrated system environment further comprising a plurality of second identity providers, wherein the first identity provider determines which of the plurality of second identity providers to which the first network client should be redirected based on:
account identification information provided in the request from the first network client to establish the connection with the access-restricted network resource; and/or
network address information of the first network client.

15. A computer readable medium including instructions that, when executed by at least one processor, cause the at least one processor to perform the method of any of the preceding claims.
